# DEMANDE DE BREVET EUROPEEN

(11) **EP 1 767 423 A1**
(43) Date de publication de la demande: **28.03.2007**
(21) Numéro de dépôt: 06019437.0
(22) Date de dépôt: 18.09.2006
(51) Int. Cl.: B60T 11/232, F16J 15/32

(54) **Maître-cylindre d'un vehicule automobile**

(30) Priorité: 26.09.2005 FR 0509909
(71) Demandeur: ROBERT BOSCH GMBH, 70442 Stuttgart (DE)
(72) Inventeur: Bernadat, Olivier, 94170 Le Perreux Sur Marne (FR); Beylerian, Bruno, 95380 Louvres (FR); Bourlon, Philippe, 77230 Dammartin en Goele (FR); Nen, Yannick, 91290 Arpajon (FR)
(74) Mandataire: Hurwic, Aleksander Wiktor

(57) **Abrégé**

L'invention concerne un maître cylindre (1) équipé d'au moins un piston (4,5) et d'au moins un moyen d'étanchéité (19,20,21,22). Le moyen d'étanchéité est partiellement rigidifié par l'intermédiaire d'une armature (25). De plus pour retenir le piston dans un alésage (3) du maître cylindre, l'invention prévoit également de réaliser une rainure (31) sur une circonférence du piston et contre laquelle le moyen d'étanchéité est destiné à être placé en appui lorsque le maître cylindre est en position de repos. Ainsi positionné en appui, le moyen d'étanchéité empêche le piston de sortir de l'alésage du maître cylindre.

## Description

L'invention se rapporte à un maître cylindre d'un véhicule. L'invention a pour but d'améliorer des performances d'un maître cylindre. L'invention est plus particulièrement destinée au domaine de l'automobile mais pourrait s'appliquer dans d'autres domaines.

Il est connu des maîtres cylindres tandems comportant un circuit hydraulique primaire et un circuit hydraulique secondaire, chacun des circuits comportant un piston respectivement primaire et secondaire. Le piston primaire et le piston secondaire sont amenés à coulisser dans un alésage formé dans un corps du maître cylindre. Le piston primaire et le piston secondaire définissent respectivement une chambre primaire et une chambre secondaire. La chambre primaire et la chambre secondaire sont remplies de fluide hydraulique ou liquide de frein via respectivement un réservoir primaire de fluide hydraulique et un réservoir secondaire de fluide hydraulique.

Le maître cylindre comporte un premier moyen, un deuxième moyen, un troisième moyen, et un quatrième moyen d'étanchéité. Le premier moyen est situé dans la chambre primaire et forme une coupelle d'étanchéité primaire. Cette coupelle d'étanchéité primaire est positionnée à une entrée de la chambre primaire. Cette coupelle primaire isole la chambre primaire de l'extérieur du maître cylindre. Le deuxième moyen d'étanchéité est situé dans la chambre primaire et forme un joint d'étanchéité primaire. Ce joint d'étanchéité primaire est positionné entre une paroi délimitée par l'alésage du maître cylindre et le piston primaire. Ce joint primaire contrôle le passage du fluide hydraulique depuis le réservoir primaire jusque dans la chambre primaire en fonction de la position du piston primaire dans l'alésage du maître cylindre.

Le troisième moyen d'étanchéité est situé dans la chambre secondaire et forme une coupelle d'étanchéité secondaire. Cette coupelle d'étanchéité secondaire est positionnée à une entrée de la chambre secondaire et isole la chambre secondaire de la chambre primaire. Le quatrième moyen d'étanchéité est situé dans la chambre secondaire et forme un joint d'étanchéité secondaire. Ce joint d'étanchéité secondaire est positionné entre une paroi délimitée par l'alésage du maître cylindre et le piston secondaire. Ce joint secondaire contrôle le passage du fluide hydraulique depuis le réservoir secondaire jusque dans la chambre secondaire en fonction de la position du piston secondaire dans l'alésage du maître cylindre.

Le joint primaire, le joint secondaire, la coupelle primaire et la coupelle secondaire sont chacun logés dans une gorge périphérique creusée dans la paroi du maître cylindre et contournant le piston. Ces joints et coupelles sont réalisés en caoutchouc et possèdent des profils avec des parties repliées en forme de U. Ces joints et coupelles forment des anneaux d'axe de révolution coaxial à un axe de déplacement du piston dans l'alésage du maître cylindre.

Au repos, c'est-à-dire lorsqu'une pédale de frein du véhicule n'est pas actionnée, la chambre primaire et la chambre secondaire sont remplies de liquide de frein provenant respectivement du réservoir primaire et du réservoir secondaire. Lors d'un freinage, c'est-à-dire lorsque la pédale de frein est actionnée, l'écoulement du liquide de frein en provenance des réservoirs dans la chambre primaire et dans la chambre secondaire est bloqué. En effet, en avançant le long de la paroi du maître cylindre, le piston primaire et le piston secondaire sont positionnés par rapport respectivement au joint primaire et au joint secondaire de telle manière que le joint primaire et le joint secondaire bloquent le passage du liquide depuis respectivement le réservoir primaire et le réservoir secondaire jusque dans la chambre primaire et dans la chambre secondaire. La pression à l'intérieur de la chambre primaire et de la chambre secondaire augmente alors. Il s'ensuit que le liquide de frein est injecté depuis les chambrés dans les dispositifs de freinage du véhicule.

Au cours du déplacement du piston primaire le long de la paroi du maître cylindre par exemple, le piston primaire est amené à se frotter contre le joint primaire. Lors d'un freinage brusque, c'est à dire lorsque la pédale de frein est brusquement actionnée, il peut arriver que le joint primaire roule sur lui-même à l'intérieur de la gorge correspondante, ou bien qu'il s'extrude de la gorge ou bien même qu'il se déchire. Ainsi, on risque d'aboutir à une situation où le joint primaire ne joue plus un rôle d'étanchéité de la chambre primaire vis-à-vis du réservoir primaire. Le fluide contenu dans la chambre primaire peut alors s'insinuer entre la paroi et le piston primaire. On aboutit à un freinage qui est rendu beaucoup moins efficace, voire qui peut devenir déficient. On comprend qu'un tel freinage peut donc nuire à la sécurité d'un conducteur du véhicule.

Pour résoudre ce problème, dans l'invention, on augmente la raideur d'une aile du joint concerné, celle qui porte contre le piston. Ainsi, en cas de retour brusque de ce dernier ou lors d'un transport, le risque de détérioration du joint est réduit. Pour augmenter cette raideur, il serait possible d'augmenter la taille du joint primaire ou secondaire d'étanchéité de manière à empêcher que ce joint primaire ou secondaire ne roule sur lui-même ou qu'il ne se déchire.

De préférence, pour parvenir à ce résultat, l'invention prévoit de rigidifier en partie le joint d'étanchéité par une armature. Cette partie rigidifiée est destinée à être placée en appui contre le piston. Avec une telle armature, la rigidité est notablement augmentée dans une direction parallèle au sens de déplacement du piston (ce qui empêche le roulage) sans trop augmenter la rigidité radiale (qui elle, est calculée p.our faciliter les écoulements au repos ou au retrait).

Ainsi le joint d'étanchéité ne risque plus de rouler sur lui-même, ni de s'extruder, ou ni même de se déchirer.

L'armature est réalisée en forme d'anneau flexible.

L'invention a donc pour objet un maître cylindre d'un véhicule automobile comportant
- un corps creusé d'un alésage,
- au moins un piston coulissant le long d'une paroi formée par l'alésage du corps et définissant une chambre,
- au moins un réservoir de fluide hydraulique débouchant dans l'alésage, et
- au moins un joint d'étanchéité de la chambre à section en U, logé entre la paroi et le piston, caractérisé en ce que
- le joint comporte une armature rigidifiante.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : Une coupe longitudinale d'un maître cylindre tandem pouvant être muni d'un moyen d'étanchéité, selon l'invention ;
- Figure 2 : Une représentation partielle d'un maître cylindre en position de repos équipé d'un joint d'étanchéité selon l'invention ;
- Figure 3 : Une représentation partielle d'un maître cylindre en position de freinage équipé d'un joint d'étanchéité selon l'invention ;
- Figure 4 : Une représentation tridimensionnelle d'un moyen d'étanchéité, selon l'invention.

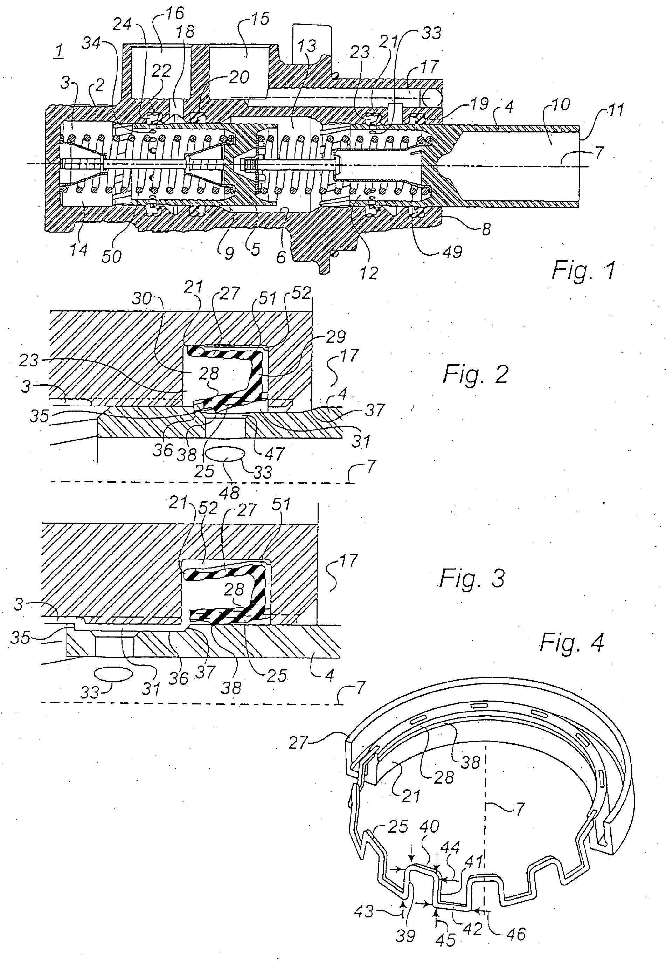

La figure 1 illustre un maître cylindre 1 d'un véhicule automobile, selon l'invention. Le maître cylindre est ici un maître cylindre tandem. L'invention est bien entendu applicable au cas où le maître cylindre est simple. Un tel maître cylindre tandem 1 comporte un corps 2 creusé d'un alésage 3. Ce maître cylindre comporte également un circuit hydraulique primaire muni d'un piston primaire 4 et un circuit hydraulique secondaire muni d'un piston secondaire 5. Le piston primaire 4 et le piston secondaire 5 coulissent le long d'une paroi 6 délimitée par l'alésage 3 du corps 2. Le piston primaire 4 et le piston secondaire 5 coulissent longitudinalement le long d'un axe d'insertion 7 d'une tige de poussée (non représentée) à l'intérieur du maître cylindre 1. Le maître cylindre est actionné par la tige de poussée qui est elle-même actionnée lorsque l'on appuie sur une pédale de frein (non représentée). Un réceptacle 10 accueillant cette tige de poussée est formé à une extrémité arrière 11 du piston primaire 4, une extrémité avant 12 du piston primaire étant destinée à être placée en regard du piston secondaire 5. Normalement, l'axe 7 est un axe qui se confond avec un axe de déplacement du piston primaire 4 et avec un axe de déplacement du piston secondaire 5.

Le piston primaire 4, le piston secondaire 5 et la paroi 6 du maître cylindre délimitent une chambre primaire 13. Le piston secondaire 5 et la paroi 6 du maître cylindre 1 délimitent une chambre secondaire 14. Le piston primaire 4 est destiné à comprimer un fluide hydraulique de freinage ou liquide de frein contenu dans la chambre primaire 13. Le piston secondaire 5 est destiné à comprimer un fluide hydraulique de freinage ou liquide de frein contenu dans la chambre secondaire 14. Chacun des liquides de frein contenus respectivement dans la chambre primaire 13 et dans la chambre secondaire 14 sont issus respectivement d'un réservoir de fluide hydraulique primaire 15 et d'un réservoir de fluide hydraulique secondaire 16. Le réservoir primaire 15 et le réservoir secondaire 16 alimentent en fluide respectivement la chambre primaire 13 et la chambre secondaire 14 via un conduit primaire 17 et via un conduit secondaire 18. Le conduit primaire 17 et le conduit secondaire 18 sont creusés dans le corps 2 du maître cylindre et débouchent respectivement dans la chambre primaire 13 et dans la chambre secondaire 14.

Le maître cylindre 1 comporte également au moins un moyen d'étanchéité. Préférentiellement, chaque chambre peut comporter deux moyens d'étanchéité. Chacun de ces moyens d'étanchéité est réalisé en caoutchouc à section longitudinale par rapport à l'axe 7 en forme de U. Chacun de ces moyens forme un anneau disposé coaxialement par rapport à l'axe 7.

Comme précédemment mentionné, la chambre primaire 13 comporte un premier moyen d'étanchéité ou coupelle d'étanchéité primaire 19 et un deuxième moyen d'étanchéité ou joint d'étanchéité primaire 21. La chambre secondaire 14 comporte un troisième moyen d'étanchéité ou coupelle d'étanchéité secondaire 20 et un quatrième moyen d'étanchéité ou joint secondaire 22. L'invention vise l'un quelconque de ces joints ou coupelles, ou plusieurs ou tous.

La coupelle primaire 19 et la coupelle secondaire 20 sont disposées respectivement à une entrée 8 de la chambre primaire 13 et à une entrée 9 de la chambre secondaire 14. La coupelle primaire 19 assure une étanchéité de la chambre primaire 13 vis-à-vis de l'extérieur du maître cylindre. La coupelle secondaire 20 assure une étanchéité de la chambre secondaire 14 vis-à-vis de la chambre primaire 13.

Le joint primaire 21 est disposé entre la paroi 6 de l'alésage 3 du corps 2 et le piston primaire 4. Le joint secondaire 22 est disposé entre la paroi 6 de l'alésage 3 du corps 2 et le piston secondaire 5. Le joint primaire 21 et le joint secondaire 22 sont positionnés respectivement dans une gorge périphérique primaire 23 et dans une gorge périphérique secondaire 24 tout en étant placés respectivement en regard du piston primaire 4 et du piston secondaire 5. La gorge primaire 23 et la gorge secondaire 24 sont creusées dans la paroi 6 du corps 2 autour de l'axe de déplacement du piston primaire 4 dans un plan perpendiculaire à ce même axe.

Le joint primaire 21 et le joint secondaire 22 permettent de contrôler respectivement le passage du liquide de frein depuis le réservoir primaire 15 et le réservoir secondaire 16 en direction respectivement de la chambre primaire 13 et de la chambre secondaire 14.

Selon l'invention, figure 1, la coupelle primaire 19, la coupelle secondaire 20, le joint primaire 21 et le joint secondaire 22 peuvent être au moins partiellement rigidifiés. Notamment, figure 2, le joint primaire 21 comporte une armature rigidifiante primaire 25. Le joint secondaire 22, la coupelle primaire 19 et la coupelle secondaire 20 peuvent également comporter une armature. Pour simplifier la description de l'invention, l'invention sera décrite pour le joint primaire 21.

Le joint primaire 21 comporte une lèvre externe 27 et une lèvre interne 28. La lèvre externe 27 et la lèvre interne 28 sont chacune globalement cylindriques. Des génératrices de ces cylindres sont parallèles à l'axe de déplacement du piston primaire 4. La lèvre externe 27 et la lèvre interne 28 sont reliées par une couronne radiale intermédiaire 29. La lèvre externe 27 et la lèvre interne 28 délimitent entre elles une ouverture 30 qui peut être dirigée vers la chambre secondaire 14. Le joint primaire 21 est positionné autour de l'axe de déplacement du piston primaire 4. La lèvre externe 27 est placée à un endroit éloigné du piston primaire 4. Plus précisément, la lèvre externe 27 est placée à l'intérieur de la gorge primaire 23 en appui au repos contre la paroi 6 de l'alésage 3 du maître cylindre 1. La lèvre interne 28 est placée à un endroit proche du piston primaire 4. La lèvre interne 28 est placée au moins partiellement en dehors de la gorge primaire 23 et peut être positionnée à l'endroit de la gorge primaire 23 à cheval sur l'alignement de l'alésage 3. Plus précisément, au repos, c'est-à-dire lorsque la pédale de frein n'est pas actionnée, la lèvre interne 28 peut être placée en appui contre un endroit du piston primaire 4 de telle manière que le liquide de frein s'insinue depuis le réservoir primaire 15 jusque dans la chambre primaire 13 au travers d'un orifice primaire 33. En effet, le piston primaire 4 et le piston secondaire 5 sont munis d'un orifice primaire 33 et d'un orifice secondaire 34 respectivement. Chacun de ces orifices débouche par une première extrémité 47 en regard de la paroi 6 du maître cylindre et par une deuxième extrémité 48 en regard de la chambre correspondante.

L'armature 25 peut être réalisée en métal ou en matière plastique synthétique. Lorsque le joint primaire 21 armé comporte une armature en matière plastique synthétique, un tel joint primaire peut être obtenu suite à un premier moulage et à un deuxième moulage d'un premier matériau en matière plastique et d'un deuxième matériau en matière plastique. Le premier moulage permet de former l'armature 25 et le deuxième moulage ou surmoulage est réalisé sur l'armature 25 pour former le joint primaire 21. De préférence, le premier matériau plastique est dur, le second matériau est souple, par exemple en caoutchouc.

L'armature primaire 25 est réalisée de telle manière qu'elle confère au joint équipé d'une telle armature une propriété de flexibilité.

Un tel joint primaire 21 muni d'une telle armature 25 permet de renforcer une rigidité du joint primaire 21. Cette rigidité évite les retournements de la lèvre interné 28 qui serait emmenée par des frottements du piston primaire 4 contre un tel joint primaire 21. Les frottements sont occasionnés lors des déplacements du piston primaire 4 le long de la paroi 6 du maître cylindre. Les frottements à combattre sont ceux occasionnés par les déplacements brusque des pistons.

Un tel joint primaire armé 21 permet d'éviter que le joint primaire 21 ne s'extrude de la gorge primaire 23 lors des déplacements du piston primaire 4. Ou bien, un tel joint armé 21 permet d'éviter que ce même joint primaire 21 ne se déchire lors de ces mêmes déplacements du piston primaire 4.

Le joint primaire ainsi armé est partiellement rigidifié tout en gardant une propriété d'élasticité.

L'armature primaire 25 peut être intégrée à la lèvre interne 28 pour former un joint primaire armé 21. L'armature 25 est au moins partiellement périphérique le long de la lèvre interne 28. Figure 4, l'armature primaire 25 est complètement périphérique et forme selon cet exemple un anneau L'armature primaire 25 s'étend circulairement dans un cylindre circulaire d'axe coaxial à l'axe de déplacement du piston primaire 4. De préférence, la lèvre 28 et l'armature 25 ont une forme tronconique. La pointe de cette forme tronconique est dirigée selon la direction d'avancée du piston lors des freinages. L'armature 25 est formée d'un fil, de préférence plat, muni d'une série de portions crénelées identiques reliées les unes à la suite des autres. Les portions crénelées peuvent être reliées les unes aux autres pour former un anneau ressort. Ou bien, les portions identiques peuvent également être réparties le long de la lèvre interne sans être reliées les unes aux autres. Les portions crénelées sont chacune formées par un premier tronçon 39, un deuxième tronçon 40, un troisième tronçon 41 et un quatrième tronçon 42. Le premier tronçon 39, le deuxième tronçon 40, le troisième tronçon 41 et le quatrième tronçon 42 sont reliés les uns à la suite des autres.

Le premier tronçon 39 s'étend selon une première direction relativement parallèle à l'axe de déplacement du piston primaire 4. Le deuxième tronçon 40 s'étend sur une première circonférence du cylindre, selon un premier sens. Le troisième tronçon 41 s'étend selon une deuxième direction opposée à la première direction. Le quatrième tronçon 42 s'étend sur une deuxième circonférence du cylindre, selon un deuxième sens qui s'étend selon un même sens que le premier sens.

Le premier tronçon 39, le deuxième tronçon 40, le troisième tronçon 41 et le quatrième tronçon 42 comportent respectivement une première longueur 43, une deuxième longueur 44, une troisième longueur 45 et une quatrième longueur 46. La première longueur 43 et la troisième longueur 45 sont mesurées le long d'un axe relativement parallèle à l'axe de déplacement du piston primaire 4. La deuxième longueur 44 et la quatrième longueur 46 sont mesurées respectivement le long de la première circonférence et le long de la deuxième circonférence du cylindre. La première longueur 43 et la troisième longueur 45 sont identiques. La deuxième longueur 44 et la quatrième longueur 46 sont identiques. La première longueur 43 et la troisième longueur 45 d'une part, la deuxième longueur 44 et la quatrième longueur 46 d'autre part, peuvent être identiques entre elles ou bien différentes entre elles.

Un tel enchaînement de tronçons confère à l'armature une propriété de flexibilité, d'élasticité. Typiquement, le caractère plat du fil et les tronçons 39 et 41 augmentent la raideur longitudinale du joint 21. La lèvre 28 ne peut se retourner sur elle-même. Par contre, dans une direction radiale, l'élasticité est peu modifiée. Ce maintien de caractéristique est favorable à l'étanchéité d'une part; et à l'insinuation du liquide hydraulique d'autre part.

Le piston primaire 4 et le piston secondaire 5 sont ramenés en position de repos respectivement par un ressort de rappel primaire 49 et par un ressort de rappel secondaire 50.

Pour assurer une rétention du piston primaire 4 et/ou du piston secondaire 5 dans l'alésage 3 du maître cylindre, il est possible avec l'invention de maintenir en place ce même piston primaire 4 et/ou le piston secondaire 5 à l'intérieur de l'alésage 3. Ce maintien est produit par coopération d'un joint d'étanchéité armé avec le piston primaire 4 et/ou le piston secondaire 5.

La coopération du joint primaire 21 avec le piston primaire 4 peut s'effectuer par l'intermédiaire d'une feuillure ou rainure primaire 31, creusée radialement sur une surface du piston primaire 4, figure 2. Il peut en être de même pour le piston secondaire 5. Seule la rainure primaire 31 est décrite. Le joint primaire 21 selon l'invention joue un rôle de rétention du piston primaire dans l'alésage par coopération de la lèvre interne 28 avec la rainure 31.

Le piston primaire 4 est positionné dans l'alésage avec un sommet de la lèvre interne 28 du joint primaire 21 placée en appui contre la rainure 31, au fond de la feuillure, figure 2. Ainsi positionné par rapport au joint primaire 21, le piston primaire 4 ne risque plus de s'extraire de l'alésage 3. Ce maintien est particulièrement utile à la suite d'un retour brusque en position de repos du piston primaire 4 ou lors d'un transport du maître cylindre. Un tel transport est occasionné d'un lieu à un autre lieu, en vue du montage du maître cylindre dans le véhicule.

Plus précisément, la rainure primaire 31 est formée sur une surface du piston primaire 4 et sur toute une circonférence du piston primaire 4. Cette rainure primaire 31 est formée à un endroit du piston primaire 4 proche du joint primaire 21, figure 2. Une autre rainure primaire (non représentée) pourrait être réalisée à un endroit proche de la coupelle primaire 19 en plus ou à la place de la rainure primaire 31 précédente.

Figure 2, la rainure primaire 31 forme depuis l'extrémité avant 12 en direction de l'extrémité arrière 11 du piston primaire 4, longitudinalement par rapport à l'axe du piston primaire 4 une première surface 35, une deuxième surface 36 et une troisième surface 37 reliées entre elles en continu. La première surface 35 est réalisée dans un plan perpendiculaire à l'axe 7, la deuxième surface 36 est réalisée dans un plan relativement parallèle à ce même axe 7 de telle sorte que la première surface 35 et la deuxième surface 36 sont perpendiculaires entre elles. La troisième surface 37 peut être inclinée et relie la deuxième surface 36 à un reste de la surface formée par le piston primaire 4.

Au repos, c'est à dire lorsque la pédale de frein n'est pas actionnée, le joint primaire 21 est placé en appui contre la rainure 31 en aval de l'orifice primaire 33, longitudinalement par rapport à un axe passant par l'orifice primaire et relativement parallèle à l'axe du piston, selon la direction d'avancée du piston primaire lors de freinages. L'orifice primaire 33 peut être creusé à partir de la deuxième surface 36 de la rainure. Le joint primaire 21 peut être positionné en appui contre la première surface 35 et contre la deuxième surface 36 en même temps. Ou bien le joint primaire 21 peut être positionné en appui contre la première surface 35 seulement ou contre la deuxième surface 36 seulement. Le piston primaire 4 est positionné par rapport au joint primaire 21 et au conduit primaire 17 de telle manière que le liquide de frein s'écoule depuis le réservoir primaire 15 en direction de la chambre primaire 13 via le conduit primaire 17 et via l'orifice primaire 33.

Puis au moment d'un freinage du véhicule, c'est à dire lorsque la pédale de frein est actionnée, le piston primaire 4 s'enfonce dans l'alésage 3 du maître cylindre en direction du piston secondaire 5 et longitudinalement par rapport à l'axe du piston primaire 4. Le piston primaire 4 glisse le long de la paroi 6 de l'alésage 3 du maître cylindre et donc le long du joint primaire 21. Le joint primaire 21 est positionné en appui contre le piston primaire entre l'orifice primaire 33 et le conduit primaire 17. Le joint primaire 21 est placé en amont de l'orifice primaire 33, longitudinalement par rapport à un axe passant par l'orifice primaire et relativement parallèle à l'axe du piston, selon la direction d'avancée du piston primaire lors de freinages. Le liquide ne peut plus passer au travers de l'orifice primaire 33 parce que le joint primaire 21 est placé en appui contre le piston primaire et obstrue donc l'accès du liquide au travers de l'orifice primaire 33. Il se produit une montée en pression dans la chambre primaire 13. Le joint primaire 21 est placé en appui contre le reste de la surface du piston primaire 4. Mais le joint primaire 21 pourrait être placé en appui contre la deuxième ou la troisième surface de la rainure primaire 31.

Le joint primaire 21 peut être muni d'au moins un canal de réalimentation 51 dégageant un espace 52 entre le joint primaire 21 et la paroi 6 à l'intérieur de la gorge primaire 23. Le canal de réalimentation 51 est formé à partir de la couronne radiale 29. L'espace 52 permet de stocker du liquide de frein pour alimenter d'autres dispositifs de freinage tels que l'E.S.P. (Electronic Satbility Program ou Correcteur électronique de trajectoire) indépendamment du fonctionnement du maître cylindre.

Lors du retour en position de repos du piston primaire 4, le piston primaire 4 glisse le long de la paroi 6 jusqu'à une position de repos. Au fur et à mesure que le piston primaire 4 glisse le long de la paroi 6, le joint primaire 21 autorise à nouveau le liquide à circuler depuis le conduit primaire 17 jusque dans la chambre primaire 13 soit en s'insinuant entre le piston primaire 4 et la paroi 6 et/ou soit en circulant depuis le conduit 17 jusque dans la chambre primaire 13 au travers de l'orifice primaire 33. Le liquide peut s'insinuer entre un endroit de la paroi 6 placé en regard du reste de la surface du piston primaire 4 et le piston 4 du fait que la lèvre externe 27 du joint primaire 21 peut se soulever par rapport à la paroi 6. Un léger soulèvement de la lèvre externe 27 du joint primaire 21 par rapport à la paroi 6 peut se produire au tout début du relâchement de la pédale de frein. Ce soulèvement permet au liquide de s'insinuer entre la lèvre externe 27 et la paroi 6 alors que la lèvre interne 28 est toujours en appui contre le piston primaire 4 et que cette même lèvre interne 28 obstrue toujours le passage du fluide depuis le conduit primaire 17 vers l'orifice primaire 33. Le liquide s'insinue entre la lèvre externe 27 soulevée et la paroi 6 au travers du canal de réalimentation 51.

Un remplissage de la chambre primaire peut s'effectuer alors que le piston primaire 4 n'est pas encore revenu dans une position initiale de repos. Ce remplissage anticipé permet de pouvoir éventuellement freiner à nouveau alors que le piston primaire 4 n'est pas encore revenu en position initiale de repos.

Le joint primaire 21 comporte une protubérance primaire 38 s'élevant perpendiculairement à un plan formé par une surface de la lèvre interne 28, laquelle surface étant destinée à être placée en regard du piston primaire 4. Cette protubérance 38 est réalisée sur tout le pourtour du joint primaire 21. Au repos, cette protubérance 38 est placée en regard de l'orifice primaire 33, sans l'obstruer. Au freinage, le piston primaire 4 est déplacé de telle manière que la protubérance 38 est située en appui contre le piston primaire 4. Cette protubérance 38 permet de réduire une course morte du piston primaire 4. On entend par course morte du piston primaire 4, une distance que doit effectuer le piston primaire 4 dans l'alésage 3 pour que l'on obtienne un freinage du véhicule. Cette distance est mesurée longitudinalement par rapport à l'axe du piston primaire 4 entre un endroit du piston primaire en regard duquel est positionnée la protubérance 38 lorsque le piston primaire est en position de repos et un autre endroit du piston primaire 4 en regard duquel la protubérance 38 est placée en appui lors d'une phase de freinage. Une fois en contact avec le piston primaire 4 et positionnée en amont de l'orifice primaire 33, la protubérance 38 obstrue le passage du liquide entre le conduit primaire 17 et l'orifice primaire 33.

L'invention s'applique également dans le cas d'un maître cylindre muni d'une unique chambre et d'un unique piston.

## Revendications

1. Maître cylindre (1) d'un véhicule automobile comportant
- un corps (2) creusé d'un alésage (3),
- au moins un piston (4,5) coulissant le long d'une paroi (6) formée par l'alésage du corps et définissant une chambre (13,14),
- au moins un réservoir (15,16) de fluide hydraulique débouchant dans l'alésage, et
- au moins un joint d'étanchéité (21,22) de la chambre à section en U, logé entre la paroi et le piston, **caractérisé en ce que**
- le joint comportant une armature rigidifiante (25) s'étend circulairement sur un cylindre circulaire d'axe coaxial à un axe de déplacement du piston, l'armature étant formée d'un fil muni d'une série de portions crénelées identiques, reliées les unes à la suite des autres, lesdites portions étant formées par un premier tronçon (39) s'étendant selon une première direction parallèle à l'axe du piston, puis par un deuxième tronçon (40) porté par une première circonférence du cylindre et s'étendant selon un premier sens puis par un troisième tronçon (41) s'étendant selon une deuxième direction opposée à la première direction et par un quatrième tronçon (42) porté par une deuxième circonférence du cylindre et s'étendant selon un deuxième sens identique au premier sens.

2. Maître cylindre selon la revendication 1, **caractérisé en ce que** le joint d'étanchéité comporte une lèvre externe (27) et une lèvre interne (28), la lèvre externe et la lèvre interne étant reliées par un tronçon intermédiaire (29), la lèvre externe étant placée à un premier endroit éloigné du piston et la lèvre interne étant placée à un deuxième endroit proche du piston, la lèvre interne comportant l'armature.

3. Maître cylindre selon la revendication 2, **caractérisé en ce que** le piston est creusé sur une circonférence du piston d'une feuillure (31) périphérique contre laquelle est destiné à s'appuyer un sommet de la lèvre interne du joint, la feuillure formant une butée d'arrêt du piston dans le corps.

4. Maître cylindre selon l'une des revendications 2 à 3, **caractérisé en ce que** la lèvre interne comporte une protubérance (38) s'élevant perpendiculairement à un plan formé par une surface de la lèvre interne, laquelle surface est placée en regard du piston, la protubérance étant destinée à venir en appui contre le piston lors du déplacement du piston dans l'alésage du maître cylindre.

5. Maître cylindre selon l'une des revendications 2 à 4, **caractérisé en ce que** l'armature est au moins partiellement périphérique le long de la lèvre.

6. Maître cylindre selon la revendication 5, **caractérisé en ce que** le fil est plat.

7. Maître cylindre selon les revendications 1 à 5, **caractérisé en ce que** le deuxième tronçon et le quatrième tronçon comportent respectivement une deuxième longueur (44) et une quatrième longueur (46) identiques, laquelle deuxième longueur et laquelle quatrième longueur étant mesurées le long de circonférences du cylindre.

8. Maître cylindre selon l'une des revendications 1 à 7, **caractérisé en ce que** l'armature est métallique.

9. Maître cylindre selon l'une des revendications 1 à 7, **caractérisé en ce que** l'armature est en matière plastique.
